# EUROPEAN PATENT SPECIFICATION

(11) **EP 3 676 446 B1**
(45) Date of publication and mention of the grant of the patent: **19.05.2021**
(21) Application number: 18786377.4
(22) Date of filing: 31.08.2018
(51) Int. Cl.: D21D 5/20, D21B 1/02, B07B 13/00

(54) **SEPARATION DEVICE**
TRENNVORRICHTUNG
DISPOSITIF DE SÉPARATION

(30) Priority: 31.08.2017 FI 20175776
(43) Date of publication of application: 08.07.2020
(73) Proprietor: Andritz Oy, 00180 Helsinki (FI)
(72) Inventor: PELTONEN, Kari, 48600 Kotka (FI); VEHMAA, Janne, 48600 Kotka (FI); KAIPAINEN, Vesa, 48600 Kotka (FI); SIIK, Sami, 48600 Kotka (FI); PORKKA, Sampsa, 48600 Kotka (FI)
(86) International application number: PCT/FI2018/050616
(87) International publication number: WO 2019/043296

(56) References cited:
- EP-A2- 0 198 787
- WO-A1-96/19614
- US-A- 4 303 207
- US-A- 4 737 274

## Description

The invention relates to a separation device for separating oversize pieces from liquid and solids containing suspension, such as cellulose suspension.

### Background of the invention

The equipment and processes of the cellulose and paper industry usually endure some amount of different impurities, such as sand, but the feed material may contain larger pieces such as stones, bolts etc. metal pieces. Fibrous pieces can often be utilized and defibrated in later process stages, as long as they do not hamper the operation of the equipment. The aim is to keep the feed pulp at a high concentration, due to which it contains pieces, which at a lower concentration would remain on the bottom of the basins and containers. Usually a largest particle size is determined for process equipment, which the equipment endures without being damaged or without compromising quality. The purpose of the separation device is to separate these coarser pieces from the stream or to break them. The separation device can be used also for separating slurries or other liquids and solids.

An example of a prior art solution is disclosed in US patent 4737274, where the separation device comprises a chamber, in which the shaft of the separation unit has a toothed rotor that pushes aside towards a reject outlet pieces, which do not pass through a sieve opening. In corresponding solutions the sieve may also be e.g. a perforated plate. Typically in these solutions the rotational speed is so high that it fluidizes pulp, and thus they have a high energy consumption.

### Summary of the invention

The invention relates to a separation device according to claim 1.

The new separation device has a considerably low power demand and flow resistance and structures that are prone to wearing and breaking are avoided. The separation device is also characterized in accepting three-dimensional pieces of a certain kind and degrading of pieces for being acceptable. More exactly the separation device according to the invention is defined in claim 1. Dependent claims define preferred embodiments of the invention.

Differing from conventional solutions, the rotor unit of the separation device has a shaft transverse with respect to the through-flow direction of the separation device, which shaft rotates discs attached to the shaft, which discs are solid or open in their center and have on their outer surface and/or side surfaces notches or protrusions that make said surface jagged. A jagged surface is also understood as a substantially coarse surface, such as knurling, corrugation or roughening, which is especially advantageous on the side surfaces of the discs. The teeth of at least two sieves attached to the housing extend between the discs, the first of which sieves is between the reject conduit and the accept conduit and the second sieve is between the feed conduit and the accept conduit.

Advantageously, the lateral distance between the side surfaces of the disc and the teeth of the first sieve, the point of the teeth of the first sieve and the support members of the discs of the shaft or distance between the support sleeves between the discs and the distance between the base of the sieve and the points of the protrusions of the discs or the substantially round outer surface, i.e. the widths of the separating slots are substantially equal. Thus, the widths of these separating slots should be within 20%. For different sieves these separating slots can vary from each other. These widths of the slots dictate the size of pieces that are separated off from the pulp flow. It is to be noted that often the size of an accepted piece is limited not by its largest but its smallest dimension. Thus, e.g. a thin twig of a limited length or a flat slat can intendedly get through the separation unit. For instance pressurized pulp washers accept such pieces and they disintegrate into fibers or will be removed in later stages. Prior art devices are not good for this kind of separation.

On the outer surface and/or the sides of the discs the jagged surface formed by notches and/or protrusions transfers, tears, crushes and/or grinds oversize pieces against the sieves. Then the pieces clogged between the sieve and the disc are worn or split into acceptable size, whereby they do not cause blockages. The edges of the notches can grip and influence the pieces the same way as protrusions and lumps. If the side surfaces are smooth, pieces that have stuck between them and the sieve can move to the outer circumference, whereby the jagged outer surface of the disc transfers, tears, crushes and/or grinds the pieces and blockages do not occur. The sides of the disc can be conical, whereby they do not necessarily have a cylindrical jagged outer surface and then only the side surfaces are jagged. Then the teeth of the sieves also taper correspondingly towards the apex, in order to keep widths of the separating slots substantially equal.

The first sieve performs major part of the separation, if its flow direction is the same as the more advantageous direction of rotation of the shaft. The disc also does most of the transferring, tearing, crushing and/or grinding of oversize pieces against the first sieve. The additional function of the second sieve is to prevent return flow of accepted pieces. Most advantageously the first sieve is below the discs and the second sieve above the discs for ensuring gravity separation. The speed of rotation of the disc, the flow resistance of the outer and side surfaces of the disc and pressure difference determine the flow volume through the second sieve against the more advantageous direction of rotation of the shaft. Even a partial clogging caused by rejectable pieces in the first sieve leads also to increased flow above the shaft through the second sieve. For optimizing the separation, at least one sieve can be dimensioned differently from the other sieves. For instance the widths of the separating slots of the first sieve, or, to put it differently, the distances between the teeth of the sieve and the discs can be of different size than those of the second sieve.

Advantageously the angle between the outer surface of the disc or the front edges of the protrusions of the disc and the front surfaces of the sieves is positive and most preferably over 10 degrees, whereby the protrusion pushes to its outer circumference and towards the reject conduit a piece stopped by the sieve. A gently rising front surface, where the angle between the sieve is large, also decreases the tendency of the discs to cause swirling and fluidizing flow around them. Flow resistance and thus energy consumption can be further decreased by shaping the front surface of at least some protrusions convex and/or back surface tapered. Advantageously at least some of the teeth of the sieves are at their apex in the thickness direction chamfered thinner than at their base, whereby the flow resistance through the sieve is minimized, but the construction remains solid. Especially the front surface of the first sieve can be convex. The front surface of the sieve means the surface facing the direction of rotation of the discs. Still more advantageously the trailing edge of the first sieve is tapered, i.e. the shaping of the teeth of the sieve can correspond to the shaping of the protrusion of the disc that was mentioned earlier. The front surfaces and trailing edges of the second sieve are advantageously shaped in an opposite way, because the flow direction of the pulp is to the other direction. Decreasing the flow resistances balances the flows between the first and the second sieve. Also the risk of accumulation of blockage by fibers and passed through pieces behind the second sieve is decreased. Then the sieve can be located closer to the feed conduit. When the outer surface of the disc is substantially round, i.e. without protrusions or with low protrusions, the angle between the front surface of the sieve and the outer surface of the disc is advantageously over 80 degrees. Then oversize pieces are guided outwardly and do not get stuck between the disc and the sieve.

Advantageously the second sieve is beside the accept conduit in the direction of rotation of the shaft downstream of the accept conduit. Then rotation of discs does not cause substantial backflow, but the sieve guides pulp into the accept conduit. On the other hand, it may be advantageous to locate the second sieve beside the feed conduit, whereby especially heavy metallic reject pieces fall more efficiently down towards the reject conduit and fiber-containing lighter materials more efficiently move along into the first sieve to be degraded and no material is accumulated to the feed side of the second sieve. Sieves can be arranged between the feed conduit and the accept conduit at both said locations, whereby all advantages resulted from the locations are achieved.

Advantageously the discs are attached to the rotary shaft and/or to each other by support members parallel to the shaft, whereby the shaft does not occupy the whole space in the center of the rotor unit. The shaft can extend substantially thinner than the center hole of the discs through all of the discs. The shaft can also be divided so that separate shafts at the ends can extend e.g. only to the center of the outermost disc. Then the flow through the separation device can be of greater volume, since the flow can pass between the support members through the open space in the center. The discs can also have a central opening, whereby the flow can pass also through the center of the discs. If a clogging appears inside the support members, closed discs prevent the clogging from spreading in the lateral direction between adjacent discs. Especially the outermost discs are preferably closed except for a shaft opening, whereby the forces are most efficiently conveyed to the shaft rotating or supporting the discs. The width of the slots between the support members and the distance between the discs determine the size of particles that can pass through the hollow central space. The support members can cause chopping of long pieces having passed through them into shorter pieces against the teeth of the sieve, the housing of the device and the openings of the conduits.

Advantageously at least one sieve, most preferably the first sieve, is attached by means of a motion member, such as a slide or a hinge. Then on a blockage occasion the sieve can be moved out of the way directed by an operator or the process controller and the blockage can be released. Then a duct bypassing the separation device can be in operation and the blockage can be guided from the accept channel into the reject channel e.g. by feeding liquid into the accept channel. The blockage can also be guided into another reject channel that is connected to the accept channel downstream of the separation device. If the connection of the sieve yields or it is drawn in by means of a slide due to excess force caused by a reject piece, breaking of the separation device can be avoided. An excess force can activate moving of the sieve e.g. by means of a spring-loaded hinge or forces measured by sensors.

If the outer or side surfaces of the discs are in addition to or instead of protrusions provided with smaller humps or notches, they can tear, crush and/or grind pieces that are close to being accepted. If there are differences between the distances of the humps or notches from the center of the shaft, said effects take place more widely along the length of the separating slots.

If at least some of the biggest protrusions of the discs are located on the shaft in the rotational direction at different locations, the force impacts caused by crashing and hitting of pieces are divided more evenly, which allows avoiding e.g. unnecessary yielding or breaking of the sieves.

Advantageously at least one sensor based on e.g. magnetism. ultrasound, acoustic emission and/or pressure measurements is attached to the reject conduit, to the rotary feeder attached to the separation device, to the housing most preferably in the vicinity of the sieves for detecting generation of blockages and/or the filling of the reject conduit or the device removing reject. Reject material enters the separation device usually only temporarily, so that by means of using sensors the emptying of reject channels can be performed only when needed and not e.g. at regular intervals.

### List of drawings

Fig. 1 illustrates a preferred embodiment, where the second sieve is close to the accept conduit,
Fig. 2 illustrates another preferred embodiment of the location of the second sieve,
Fig. 3 illustrates a preferred embodiment of a sieve,
Fig. 4 illustrates a preferred embodiment of the separation unit from the direction of the feed conduit,
Fig. 5 illustrates a preferred embodiment, where the discs are attached to each other with support members parallel to the shaft,
Fig. 6 illustrates a preferred embodiment of the rotor unit in cross section, where the discs are attached to each other with support members parallel to the shaft,
Fig. 7 illustrates a preferred embodiment, where the front surface of the protrusion of the disc is rounded and the back surface is tapered,
Fig. 8 illustrates a preferred embodiment, where the sieves are arranged movable, and
Fig. 9 illustrates preferred embodiments of the protrusions, humps and notches.

### Detailed description of the invention

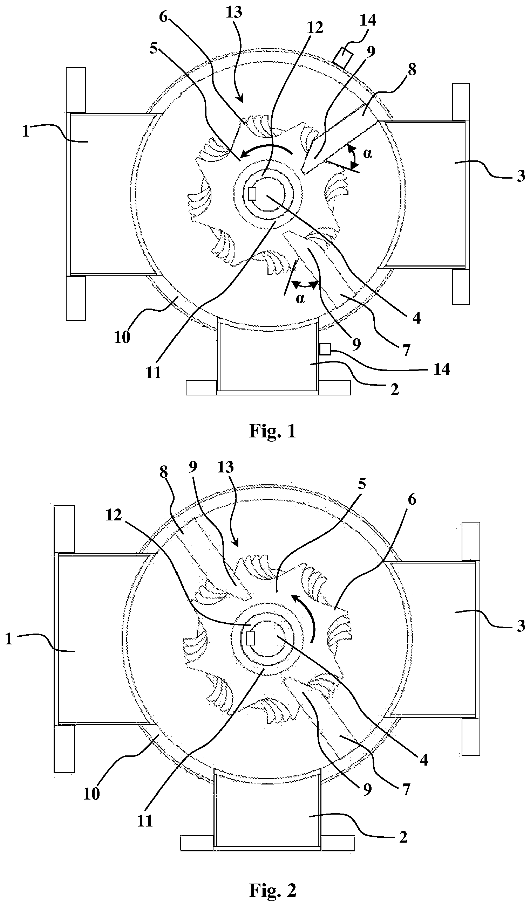

Figure 1 illustrates a preferred embodiment of the separation device having a housing 10 with a feed conduit 1 and a reject conduit 2, between which conduits 1 and 2 and an accept conduit 3 a rotor unit 13 is arranged. The rotor unit 13 has a shaft 4 transverse with respect to the through-flow direction, which shaft 4 rotates discs 5 attached to the shaft 4, and at least two sieves 7 and 8. The shaft 4 is advantageously in horizontal position. The outer surface of the discs 5 is provided with protrusions 6. Between the discs 5 there may be support sleeves 11, which keep their distances equal. More advantageous direction of rotation is marked in the Figure. The rotational speed of the discs 5 is advantageously between 200-1000 rpm. Advantageously at least some protrusions 6 of different discs 5 are at various locations in the rotational direction of the shaft 4. Advantageously the shaft is provided with a tube shaft 12, onto which the discs 5 and optional support sleeves 11 are arranged as a rotor unit 13. It is advantageous to make the discs 5 identical, but they can have a different number of various protrusions 6.

The teeth 9 of two sieves 7, 8 attached to the housing extend between the discs 5, of which sieves the first sieve 7 is between the reject conduit 2 and accept conduit 3. The second sieve 8 is between the feed conduit 1 and the accept conduit 3. The second sieve 8 is located adjacent to the accept conduit 3. Reject pieces cannot pass through the obstacles formed by the sieves 7, 8, the discs 5, the protrusions 6 and the shaft 4 or the support rings 11, but they are passed due to gravity and the impact the protrusions 6 into the reject conduit 3, via which the reject pieces are removed e.g. by means of a rotary feeder.

Advantageously one or more sensors 14 are attached to the reject conduit 3, the rotary feeder connected to the separation device or a corresponding device, to the sieves or in the vicinity of the sieves for indicating blockages and/or the filling of reject channels. The sensors 14 are connected to the control of the separation device or to process control. Sensors based on magnetism allow detecting a ferromagnetic metal piece. Ultrasound allows detecting solid pieces. Acoustic emission and/or acceleration sensors allow detecting deviations in sounds generated by the device, as well as collision of flowing pieces to structures of the device, and vibrations of the device. Pressure measurements allow detecting blockages in the separation device.

Pieces in the pulp flow that are at a density close to that of the pulp, and especially fibrous pieces, float better in the flow and they can advantageously remain to be torn, crushed and/or ground mostly at the slots between the protrusions 6 and the first sieve 7. The smaller the angle α between the front surface of the sieve 7, 8 and the front surface of the protrusion 6 or the substantially round outer surface, the more likely the degrading takes place. The bigger the angle α is, the better reject pieces are guided out of the separation unit. The angle α can be of different size in different sieves 7, 8. Also the dimensions of the separating slots may be optimized in different sieves 7, 8 to be of different size. The sieves 7, 8 can be in different orientations and at different locations than in the presented drawings.

Figure 2 illustrates a corresponding separation device as Figure 1, but its second sieve 8 is located near the feed conduit 1, whereby it guides the separated pieces better into the reject conduit 2. This sieve 8 can also be placed at the same location as a doubled second sieve 8, together with the second sieve 8 of Fig. 1.

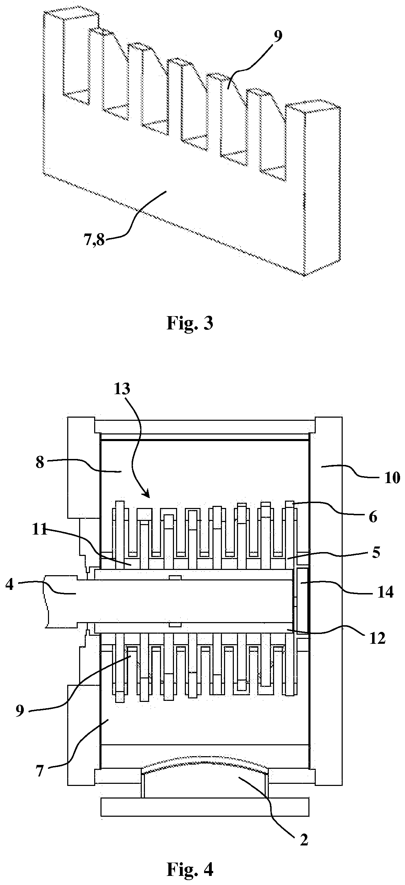

Figure 3 illustrates a preferred embodiment of the sieve 7, 8. Tips of the teeth 9, which extend between the discs 5 of the sieve 7, 8 are advantageously made in the thickness direction thinner than the base of the sieve 7, 8.

Figure 4 illustrates the solution according to Figure 1 seen from the direction of the feed conduit 1. The shaft 4 is supported on bearings to the housing 10 at the end of the motor that rotates the shaft. The end of the shaft 4 is preferably provided with a filler piece 14 between the ends of the sieves 7, 8, which filler piece forms the separating slots between the end of the shaft 4 and the sieve 7, 8. The shaft 4 can also be bearing-mounted to the housing 10 at its one end. The filler piece 14 can also act as bearing housing for the shaft 4.

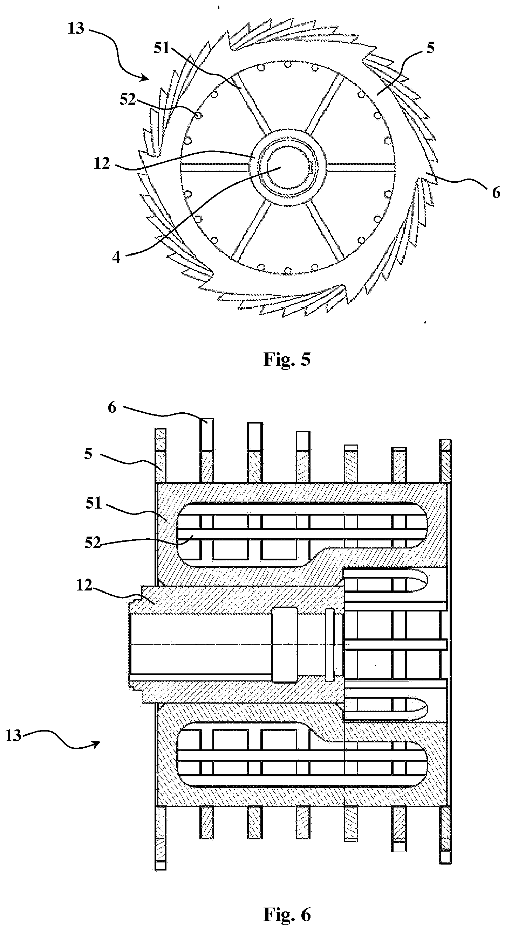

Figures 5 and 6 illustrate a preferred embodiment, where the discs 5 are attached to the shaft 4 and to each other with support members 51, 52 parallel to the shaft 4. Because an open space is formed in the center of the rotor unit 13, acceptable pulp can pass also through the center part of the rotor unit 13. Planar support members 51 transmit the rotational force of the shaft 4 and support the discs 5. Rod-like support members 52 mainly act as sieves, if the distances between the planar support members 51 are too big. The mutual distances of the support members 51, 52 are preferably substantially of equal size as the separating slots of the rest of the structure. The shaft 4 can have a length equal to that of the rotor unit 13 or it can be shorter, whereby the center of the separation section is completely or partially open. The shaft 4 can also be divided so that the drive shaft 4 extends only to the outermost disc 5 and the other end of the rotor unit 13 is supported by a bearing-mounted support shaft to the housing 10 or to the filler piece 14.

The rotor unit 13 allowing through-passing flow can be designed so that the discs 5 are either closed or open at their center. If the rod-like support members 52 extend through the perforations of the discs or are adequately supporting and fixed to the discs, planar support members 51 are not needed. At least the outermost discs 5 have to be attached at their center opening either to the shaft 4 or to the support shaft of the other end, in order to make the rotor unit 13 robust enough without planar support members 51. Support sleeves can be provided on the rod-like support members 52 between the discs 6, which support sleeves determine the distance between the disc, if the rod-like support members 52 are not otherwise fixed to the discs.

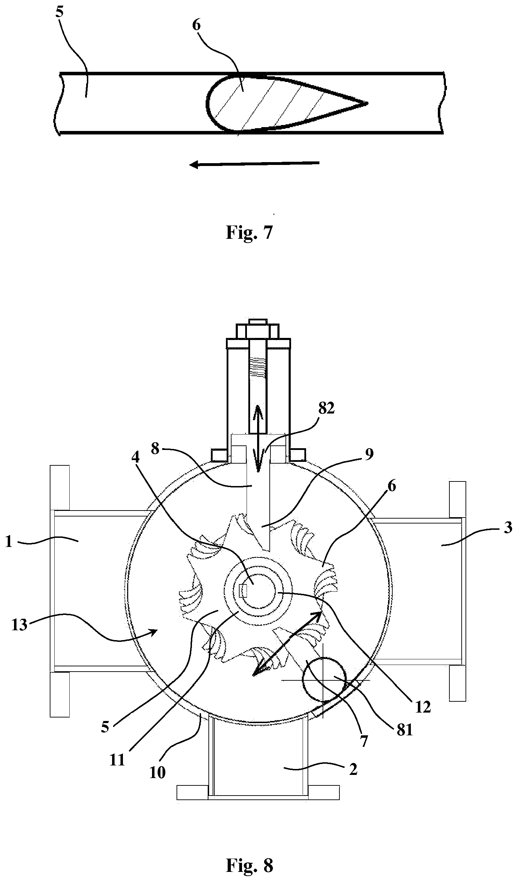

Figure 7 illustrates a preferred cross section of the protrusion 6 of the disc 5. The front surface of the protrusion is convex and the trailing edge is tapered for decreasing the flow resistance. The tooth of the sieve 7, 8 can be shaped in a corresponding way. A tapered trailing edge does not intensively draw and collect behind itself fibers and pieces, which might accumulate a blockage.

Figure 8 illustrates some solutions, where the sieves 7, 8 are arranged movable. The movement possibility allows e.g. removing blockages. The first sieve 7 is hinged, whereby it can be rotated by means of an actuator most preferably counter currently, whereby a reject piece is pushed into the reject conduit 2. If the shaft of the joint 81 is e.g. spring-loaded, the sieve 7 can occasionally yield cocurrently, when it is subjected to an excess force. A sensor or a switch connected to the sieve 7 or its hinge can indicate data on a coincident or an excess force to the control of the separation device or to process control or an operator. The second sieve 8 can be moved by means of an actuator of the slide 82 closer to or further from the discs 5. One or more of the sieves 7, 8 can be differently movable and located at various points of the housing 10. If there are more than two sieves 7, 8, moving at least one of the doubled sieves 7, 8 aside when needed is an especially advantageous possibility.

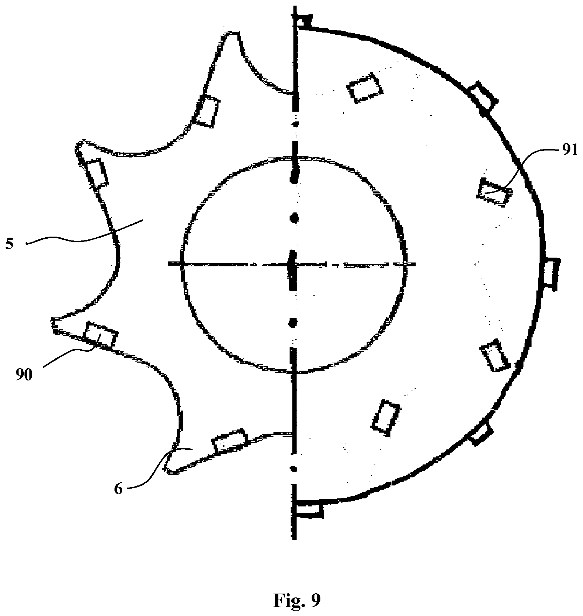

Fig. 9 illustrates on the left-hand side protrusions 6 on the outer surface of the disc, the protrusions having a gentle sloping front surface and a sharper trailing edge. Most advantageously the protrusions 6 have in the radial direction a height of 10-50 mm. Smaller notches or humps 90 are shaped or attached to the disc 5 or its protrusions 6. Their function is to assist in tearing, crushing and/or grinding pieces against the sieves 7, 8. A hump 90 can extend to the side of the protrusion. It can be fixed upon the front surface of the protrusion 6. Advantageously, said humps 90 or notches are located at various distances from the center of the disc 5.

The right-hand side illustrates an embodiment where the protrusions on the outer surface and the sides of the disc are humps 91 and/or notches at corresponding locations. Then the disc 5 is substantially circular. When the notches or humps 91 are of adequate size, they can act almost as the presented bigger protrusions 6. Instead of or in addition to protrusions 6, humps or notches 6, 91, the outer and side surfaces of the disc 5 can have knurling, grooving or roughening.

## Claims

1. A separation device for separating oversized pieces from a liquid and solids containing suspension, such as a cellulose suspension, the device having a housing (10) with a feed conduit (1) and a reject conduit (2), between which conduits (1, 2) and an accept conduit (3) of the housing (10) a rotor unit (13) is located, wherein the rotor unit (13) is provided with a shaft (4) transverse with respect to the through-flow direction of the separation unit, which shaft (4) rotates discs (5) attached to the shaft (4), the outer surface and/or side surfaces of the discs (5) being jagged, i.e. having protrusions (6), humps (90, 91) and/or notches, and wherein the separation device comprises at least two sieves (7, 8) attached to the housing (10) and provided with teeth (9) extending between the discs (5), the at least two sieves (7, 8) comprising a first sieve (7) located between the reject conduit (2) and the accept conduit (3) and a second sieve (8) located between the feed conduit (1) and the accept conduit (3).

2. The separation device according to claim 1, **characterized in that** the front surface of the protrusions (6) of the disc (5) is more gently sloping than the trailing edge.

3. The separation device according to claim 1 or 2, **characterized in that** the discs (5) are attached to the shaft (4) and/or to each other by means of planar support members (51) and/or rod-like support members (52) parallel to the shaft (4).

4. The separation device according to any of the preceding claims, **characterized in that** the widths of the separating slots between the rotor unit (13) and at least one sieve (7, 8) are of substantially equal size.

5. The separation device according to any of the preceding claims, **characterized in that** the distance between the teeth (9) of at least one sieve (7, 8) is of a different size than the distance between the teeth (9) of some other sieve (7, 8).

6. The separation device according to any of the preceding claims, **characterized in that** at least one sieve (7, 8) is attached by means of a motion member such as a hinge (81) or a slide (82).

7. The separation device according to claim 5, **characterized in that** the attachment of at least one sieve (7, 8) is arranged movable under the impact or indication of an excess force caused by a reject piece.

8. The separation device according to any of the preceding claims, **characterized in that** the second sieve (8) is close to the accept conduit (3).

9. The separation device according to any of the preceding claims, **characterized in that** the second sieve (8) is close to the feed conduit (1).

10. The separation device according to any of the preceding claims, **characterized in that** the front surface of at least some protrusions (6) of at least some discs (5) is convex and/or the trailing edge of the protrusions (6) is tapered.

11. The separation device according to any of the preceding claims, **characterized in that** there are differences in distances from the center of the shaft (4) to the humps (90, 91) or notches on the outer or side surfaces of the discs (5).

12. The separation device according to any of the preceding claims, **characterized in that** at least some of the teeth (9) of the sieves (7, 8) taper towards the apex and/or the front surface and/or the trailing edge of the tooth (9) of any of the sieves (7, 8) is convex or tapered.

13. The separation device according to any of the preceding claims, **characterized in that** at least some protrusions (6) of various discs (5) of the rotor unit (13) are in the rotational direction of the shaft (4) at different locations.

14. The separation device according to any of the preceding claims, **characterized in that** the first sieve (7) and/or the second sieve (8) is doubled, i.e. they consist of two separate sieves.

15. The separation device according to any of the preceding claims, **characterized in that** at least one sensor (14) based on magnetism, ultrasound, acceleration, acoustic emission and/or pressure measurements is attached to the reject conduit, to a rotary feeder attached to the separation device, to the sieves (7, 8) and/or to the housing (10) especially in the vicinity of the sieves for detecting generation of blockages and/or filling of the reject conduit or a reject removing device and/or hitting of pieces present in the flow to structures of the separation device, and for detecting vibrations of the device.

## Patentansprüche

1. Trennvorrichtung zum Trennen von übergroßen Stücken aus einer flüssigkeits- und feststoffhaltigen Suspension, wie zum Beispiel einer Zellulosesuspension, wobei die Vorrichtung ein Gehäuse (10) mit einer Zufuhrleitung (1) und einer Abgangsleitung (2) aufweist, wobei sich zwischen diesen Leitungen (1, 2) und einer Aufnahmeleitung (3) des Gehäuses (10) eine Rotoreinheit (13) befindet, wobei die Rotoreinheit (13) mit einer Welle (4) quer zu der Durchflussrichtung der Trenneinheit versehen ist, wobei die Welle (4) an der Welle (4) befestigte Scheiben (5) dreht, wobei die Außenfläche und/oder die Seitenflächen der Scheiben (5) gezackt sind, das heißt Vorsprünge (6), Buckel (90, 91) und/oder Kerben aufweisen, und wobei die Trennvorrichtung mindestens zwei Siebe (7, 8) umfasst, die an dem Gehäuse (10) befestigt und mit Zähnen (9) versehen sind, die sich zwischen den Scheiben (5) erstrecken, wobei die mindestens zwei Siebe (7, 8) ein erstes Sieb (7), das sich zwischen der Abgangsleitung (2) und der Aufnahmeleitung (3) befindet, und ein zweites Sieb (8), das sich zwischen der Zufuhrleitung (1) und der Aufnahmeleitung (3) befindet, umfassen.

2. Trennvorrichtung nach Anspruch 1, **dadurch gekennzeichnet, dass** die vordere Fläche der Vorsprünge (6) der Scheibe (5) sanfter geneigt ist als der hintere Rand.

3. Trennvorrichtung nach Anspruch 1 oder 2, **dadurch gekennzeichnet, dass** die Scheiben (5) mittels planarer Stützglieder (51) und/oder stangenförmiger Glieder (52) parallel zu der Welle (4) an der Welle (4) und/oder aneinander befestigt sind.

4. Trennvorrichtung nach einem der vorhergehenden Ansprüche, **dadurch gekennzeichnet, dass** die Breiten der Trennschlitze zwischen der Rotoreinheit (13) und mindestens einem Sieb (7, 8) im Wesentlichen die gleiche Größe aufweisen.

5. Trennvorrichtung nach einem der vorhergehenden Ansprüche, **dadurch gekennzeichnet, dass** der Abstand zwischen den Zähnen (9) mindestens eines Siebs (7, 8) eine andere Größe aufweist als der Abstand zwischen den Zähnen (9) eines anderes Siebs (7, 8).

6. Trennvorrichtung nach einem der vorhergehenden Ansprüche, **dadurch gekennzeichnet, dass** mindestens ein Sieb (7, 8) mittels eines Bewegungsglieds, wie zum Beispiel eines Gelenks (81) oder eines Gleitstücks (82), befestigt ist.

7. Trennvorrichtung nach Anspruch 5, **dadurch gekennzeichnet, dass** die Befestigung mindestens eines Siebs (7, 8) unter der Einwirkung oder Anzeige einer durch ein Abgangsstück bewirkten übermäßigen Kraft beweglich angeordnet ist.

8. Trennvorrichtung nach einem der vorhergehenden Ansprüche, **dadurch gekennzeichnet, dass** sich das zweite Sieb (8) nahe der Aufnahmeleitung (3) befindet.

9. Trennvorrichtung nach einem der vorhergehenden Ansprüche, **dadurch gekennzeichnet, dass** sich das zweite Sieb (8) nahe der Zufuhrleitung (1) befindet.

10. Trennvorrichtung nach einem der vorhergehenden Ansprüche, **dadurch gekennzeichnet, dass** die vordere Fläche mindestens einiger Vorsprünge (6) mindestens einiger Scheiben (5) konvex ist und/oder der hintere Rand der Vorsprünge (6) konisch zuläuft.

11. Trennvorrichtung nach einem der vorhergehenden Ansprüche, **dadurch gekennzeichnet, dass** es bei den Abständen von der Mitte der Welle (4) zu den Buckeln (90, 91) oder Kerben an den Außen- oder Seitenflächen der Scheibe (5) Unterschiede gibt.

12. Trennvorrichtung nach einem der vorhergehenden Ansprüche, **dadurch gekennzeichnet, dass** mindestens einige der Zähne (9) der Siebe (7, 8) zu dem Scheitel konisch zulaufen und/oder die vordere Fläche und/oder der hintere Rand des Zahns (9) oder irgendeines der Siebe (7, 8) konvex ist oder konisch zuläuft.

13. Trennvorrichtung nach einem der vorhergehenden Ansprüche, **dadurch gekennzeichnet, dass** sich mindestens einige Vorsprünge (6) verschiedener Scheiben (5) der Rotoreinheit (13) in Drehrichtung der Welle (4) an verschiedenen Stellen befinden.

14. Trennvorrichtung nach einem der vorhergehenden Ansprüche, **dadurch gekennzeichnet, dass** das erste Sieb (7) und/oder das zweite Sieb (8) verdoppelt ist/sind, das heißt aus zwei getrennten Sieben besteht/bestehen.

15. Trennvorrichtung nach einem der vorhergehenden Ansprüche, **dadurch gekennzeichnet, dass** mindestens ein auf Magnetismus-, Ultraschall-, Beschleunigungs-, Schallemissions- und/oder Druckmessungen basierender Sensor (14) an der Abgangsleitung, an einem an der Trennvorrichtung befestigten Drehzuführer, an den Sieben (7, 8) und/oder an dem Gehäuse (10), insbesondere in der Nähe der Siebe, zum Detektieren eines Entstehens von Verstopfungen und/oder Füllens der Abgangsleitung oder einer Abgangsentfernungsvorrichtung und/oder Anschlagen von im Fluss enthaltenen Stücken an Strukturen der Trennvorrichtung und zum Detektieren von Schwingungen der Vorrichtung befestigt ist.

## Revendications

1. Dispositif de séparation destiné à séparer des morceaux surdimensionnés d'une suspension contenant un liquide et des matières solides, telle qu'une suspension de cellulose, le dispositif ayant un caisson (10) avec une conduite d'alimentation (1) et une conduite de rejet (2), une unité de rotor (13) étant située entre ces conduites (1, 2) et une conduite d'admission (3) du caisson (10), l'unité de rotor (13) étant pourvue d'un arbre (4) transversal par rapport à la direction d'écoulement de l'unité de séparation, lequel arbre (4) fait tourner des disques (5) fixés à l'arbre (4), la surface externe et/ou les surfaces latérales des disques (5) étant dentelées, autrement dit ayant des saillies (6), des bosses (90, 91) et/ou des entailles, et le dispositif de séparation comprenant au moins deux tamis (7, 8) fixés au caisson (10) et pourvus de dents (9) s'étendant entre les disques (5), les au moins deux tamis (7, 8) comprenant un premier tamis (7) situé entre la conduite de rejet (2) et la conduite d'admission (3) et un deuxième tamis (8) situé entre la conduite d'alimentation (1) et la conduite d'admission (3).

2. Dispositif de séparation selon la revendication 1, **caractérisé en ce que** la surface avant des saillies (6) du disque (5) est plus légèrement inclinée que le bord de fuite.

3. Dispositif de séparation selon la revendication 1 ou 2, **caractérisé en ce que** les disques (5) sont fixés à l'arbre (4) et/ou les uns aux autres au moyen d'éléments de support plans (51) et/ou d'éléments de support en forme de tige (52) parallèles à l'arbre (4).

4. Dispositif de séparation selon l'une quelconque des revendications précédentes, **caractérisé en ce que** les largeurs des fentes de séparation entre l'unité de rotor (13) et au moins un tamis (7, 8) sont de taille sensiblement égale.

5. Dispositif de séparation selon l'une quelconque des revendications précédentes, **caractérisé en ce que** la distance entre les dents (9) d'au moins un tamis (7, 8) est d'une taille différente de la distance entre les dents (9) d'un certain un autre tamis (7, 8).

6. Dispositif de séparation selon l'une quelconque des revendications précédentes, **caractérisé en ce qu'**au moins un tamis (7, 8) est fixé au moyen d'un élément de déplacement tel qu'une charnière (81) ou une glissière (82).

7. Dispositif de séparation selon la revendication 5, **caractérisé en ce que** la fixation d'au moins un tamis (7, 8) est agencée pour être mobile sous l'impact ou l'indication d'une force en excès causée par un morceau rejeté.

8. Dispositif de séparation selon l'une quelconque des revendications précédentes, **caractérisé en ce que** le deuxième tamis (8) est proche de la conduite d'admission (3).

9. Dispositif de séparation selon l'une quelconque des revendications précédentes, **caractérisé en ce que** le deuxième tamis (8) est proche de la conduite d'alimentation (1).

10. Dispositif de séparation selon l'une quelconque des revendications précédentes, **caractérisé en ce que** la surface avant d'au moins certaines saillies (6) d'au moins certains disques (5) est convexe et/ou le bord de fuite des saillies (6) est effilé.

11. Dispositif de séparation selon l'une quelconque des revendications précédentes, **caractérisé en ce qu'**il existe des différences de distance depuis le centre de l'arbre (4) jusqu'aux bosses (90, 91) ou entailles sur la surface externe ou les surfaces latérales des disques (5).

12. Dispositif de séparation selon l'une quelconque des revendications précédentes, **caractérisé en ce qu'**au moins certaines des dents (9) des tamis (7, 8) s'effilent vers le sommet et/ou la surface avant et/ou le bord de fuite (9) de l'un quelconque des tamis (7, 8) sont convexes ou effilés.

13. Dispositif de séparation selon l'une quelconque des revendications précédentes, **caractérisé en ce qu'**au moins certaines saillies (6) de divers disques (5) de l'unité de rotor (13) sont dans la direction de rotation de l'arbre (4) à différents emplacements.

14. Dispositif de séparation selon l'une quelconque des revendications précédentes, **caractérisé en ce que** le premier tamis (7) et/ou le deuxième tamis (8) sont doublés, autrement dit ils consistent en deux tamis séparés.

15. Dispositif de séparation selon l'une quelconque des revendications précédentes, **caractérisé en ce qu'**au moins un capteur (14) basé sur des mesures de magnétisme, d'ultrasons, d'accélération, d'émission acoustique et/ou de pression est fixé à la conduite de rejet, à un dispositif d'alimentation rotatif fixé au dispositif de séparation, aux tamis (7, 8) et/ou au caisson (10), en particulier à proximité des tamis pour détecter l'apparition de bouchons et/ou le remplissage de la conduite de rejet ou d'un dispositif de retrait de rebuts et/ou le choc de morceaux présents dans l'écoulement sur des structures du dispositif de séparation, et pour détecter des vibrations du dispositif.
